# EUROPÄISCHE PATENTANMELDUNG

(11) **EP 1 645 405 A2**
(43) Veröffentlichungstag der Anmeldung: **12.04.2006**
(21) Anmeldenummer: 05014400.5
(22) Anmeldetag: 02.07.2005
(51) Int. Cl.: B30B 15/00, B32B 37/10

(54) **Siegelstation**

(30) Priorität: 09.10.2004 DE 102004049266
(71) Anmelder: UHLMANN PAC-SYSTEME GmbH & Co. KG, 88471 Laupheim (DE)
(72) Erfinder: Matzenmüller, Jürgen, 88416 Bellamont (DE)
(74) Vertreter: Hentrich, Swen

(57) **Zusammenfassung**

Die Erfingung betrifft eine Siegelstation zum Siegeln einer Deckfolie auf eine Trägerfolie, insbesondere in einer Thermoformmaschine, mit einem Werkzeugoberteil (2) und einem Werkzeugunterteil (3), die zum Ausführen des Siegelvorganges mittels eines Werkzeugantriebes (4) relativ zueinander bewegbar sind und zwischen denen die Deckfolie und die Trägerfolie geführt sind. Zwischen dem Werkzeugantrieb (4) und dem zugeordneten Werkzeugoberteil (2) oder Werkzeugunterteil (3) ist eine Zwischenplatte (6) angeordnet , in der eine Mehrzahl über Druckmittelleitungen (8) mit einer Druckquelle verbundene Druckkammern (7) ausgebildet ist.

## Beschreibung

Die Erfindung betrifft eine Siegelstation zum Siegeln einer Deckfolie auf eine Trägerfolie, insbesondere in einer Thermoformmaschine, mit einem Werkzeugoberteil und einem Werkzeugunterteil, die zum Ausführen des Siegelvorganges mittels eines Werkzeugsantriebes relativ zueinander bewegbar sind und zwischen denen die Deckfolie und die Trägerfolie geführt sind.

Thermoformmaschinen sind in der Praxis weit verbreitet, bei denen auf Vorratsrollen die Deckfolie und die Trägerfolie bereit gestellt werden, die bei ihrer Verarbeitung mehrere Stationen durchlaufen, nämlich zum einen eine Heizstation zum Vorbereiten des in der nachfolgenden Formstation erfolgenden Ausbildens von Näpfen in der Trägerfolie. Daran schließt sich in einer Füllstation das Befüllen der Näpfe an, die nachfolgend in einer, beispielsweise in der DE 26 08 777 A1 beschriebenen Siegelstation mit der Deckfolie versiegelt werden, um ggfs. nachfolgend in einer Stanzstation aus dem Verbund von Deckfolie und Trägerfolie ausgestanzt zu werden. Je nach den konkret vorliegenden Anforderungen variieren die Formate hinsichtlich ihrer Längen- und Breitenausdehnung der in der Siegelstation zu verarbeitenden Folienabschnitte, wobei insbesondere bei großen Formaten ein ungleichmäßiges Siegelbild erzeugt wird, das nicht nur mit optisch sichtbaren Mängeln behaftet ist, sondern auch nicht die Dichtigkeit der Siegelung gewährleisten kann, was insbesondere dann einen gravierenden Nachteil darstellt, wenn pharmazeutische Produkte abgepackt werden, deren Mindesthaltbarkeit gewährleistet sein muss.

Der Erfindung liegt daher die Aufgabe zugrunde, eine Siegelstation der eingangs genannten Art so auszubilden, dass die Möglichkeit besteht, in einfacher Weise die beim Siegelvorgang gegebene Druckverteilung zwischen dem Werkzeugoberteil und dem Werkzeugunterteil zu beeinflussen, um ein gleichmäßiges Siegelbild zu erzielen.

Diese Aufgabe wird nach der Erfindung bei einer Siegelstation der eingangs genannten Art dadurch gelöst, dass zwischen dem Werkzeugantrieb und dem zugeordneten Werkzeugoberteil oder Werkzeugunterteil eine Zwischenplatte angeordnet ist, in der eine Mehrzahl über Druckmittelleitungen mit einer Druckquelle verbundene mit Druckkammern ausgebildet ist.

Mit dieser Siegelstation ist der Vorteil verbunden, dass in einfacher Weise die Fläche variiert werden kann, über die der Druck von dem Werkzeugantrieb auf das zugeordnete Werkzeugteil übertragen wird, so dass das aus dem Werkzeugunterteil und dem Werkzeugoberteil gebildete Siegelwerkzeug flächig zusammengedrückt wird. Besonders bevorzugt ist es dabei, wenn die Zwischenplatte zweifach vorgesehen ist und sowohl das obere Werkzeugteil als auch das untere Werkzeugteil an einer der Zwischenplatten abgestützt ist, da so die Möglichkeit besteht, in Abhängigkeit der Größe des zu siegelnden Folienabschnittes die in dem beiden Zwischenplatten aktivierten Druckkammern exakt gleich groß zu wählen gleiche Bereiche der Werkzeugteile mit Druck zu beaufschlagen.

Vorteilhaft ist es weiterhin, wenn die erste Druckkammer im Zentrum der Zwischenplatte angeordnet ist, mit einer der minimalen Siegelfläche entsprechenden Ausdehnung, so dass zumindest die erste Druckkammer bei jedem Siegelvorgang mit Druck beaufschlagt wird.

Im Rahmen der Erfindung weiterhin vorgesehen ist es, wenn die zweite Druckkammer in Förderrichtung der Deckfolie und der Trägerfolie und/oder quer zur Förderrichtung benachbart zur ersten Druckkammer angeordnet ist, da dadurch die Möglichkeit geschaffen wird, den zu siegelnden Folienabschnitt in den beiden durch die Ebene der Folien definierten Richtungen zu vergrößern.

Weitere Vergrößerungen werden in einfacher Weise dadurch erzielt, dass die der zweiten Druckkammer nachfolgenden Druckkammern in Förderrichtung und/oder quer zur Förderrichtung benachbart zur vorhergehenden Druckkammer angeordnet sind.

Um wahlweise nur einzelne Druckkammer mit Druck zu beaufschlagen, sind den Druckmittelleitungen Absperrventile zugeordnet. Die Zuordnung von Druckminderern zu den Druckmittelleitungen bewirkt, dass der in den Druckkammern herrschende Druck einstellbar ist und der spezifische Siegeldruck in den Druckkammern gleich groß gewählt werden kann, unabhängig davon, welche Formatgröße gesiegelt wird.

Im Hinblick auf einfache Verhältnisse ist es bevorzugt, wenn die korrespondierenden Druckkammern in der oberen Zwischenplatte und der unteren Zwischenplatte die gleiche Größe aufweisen, so dass stets gewährleistet ist, dass übereinstimmende Folienabschnitte dem Siegeldruck ausgesetzt sind. Dazu dient auch, dass die korrespondierenden Druckkammern in der oberen Zwischenplatte und der unteren Zwischenplatte durch Verbindungsleitungen verbunden sind, so dass in den Druckkammern stets übereinstimmende Druckverhältnisse herrschen.

Nach einer bevorzugten Ausführungsform ist vorgesehen, dass der Werkzeugantrieb als Exzenterantrieb gestaltet ist und auf die untere Zwischenplatte wirkt, während die obere Zwischenplatte mit dem Werkzeugoberteil an einer oberen Traverse angeordnet ist, also nur ein Werkzeugteil verstellt wird, während das andere Werkzeugteil stationär in der Siegelstation verharren kann. Es besteht aber selbstverständlich auch die Möglichkeit, die obere Zwischenplatte mittels des Werkzeugantriebs oder beide Werkzeugteile unabhängig voneinander über separate Werkzeugantriebe zu verstellen, insbesondere um die Folie in der Siegelstation frei zu geben.

Im Rahmen der Erfindung ist weiterhin vorgesehen, dass in der Zwischenplatte ein starrer Stempel zur unmittelbaren Kraftübertragung von dem Werkzeugantrieb vorgesehen ist, wobei der mit dem starren Stempel erzeugte Druck bei idealen Verhältnissen dem in den Druckkammern erzeugten Druck entspricht. Durch die Druckquelle ist vorzugsweise ölfreie Druckluft bereitgestellt, wobei aber auch andere Fluide prinzipiell geeignet sind.

Im folgenden wird die Erfindung an einem in der Zeichnung dargestellten Ausführungsbeispiel näher erläutert; es zeigen:
- Fig. 1: von einer Siegelstation in einer schematischen Vorderansicht das zwischen zwei Zwischenplatten angeordnete Werkzeugoberteil und Werkzeugunterteil,
- Fig. 2: eine der Fig. 1 entsprechende alternative Ausführungsform, und
- Fig. 3: eine Draufsicht zu einer Zwischenplatte.

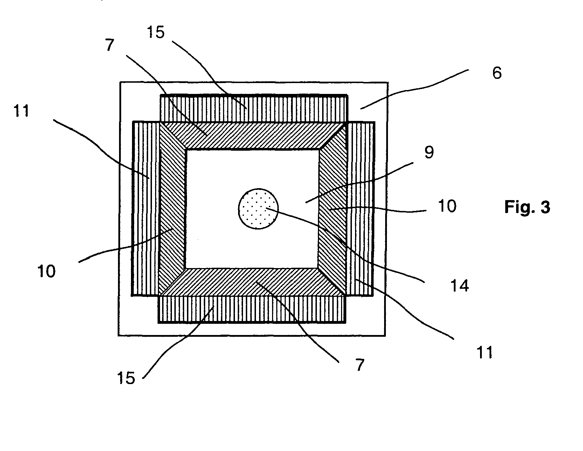

In der Zeichnung ist schematisch eine Siegelstation 1 dargestellt, wie diese in typischer Weise in Thermoformmaschinen eingesetzt wird. Die Siegelstation 1 dient zum Siegeln einer Deckfolie auf eine Trägerfolie, wobei die Deckfolie und die Trägerfolie zwischen einem Werkzeugoberteil 2 und einem Werkzeugunterteil 3 hindurchgeführt sind. Das Werkzeugoberteil 2 und das Werkzeugunterteil 3 sind mittels eines Werkzeugantriebes 4 relativ zueinander bewegbar, wobei bei dem konkret in der Zeichnung dargestellten Ausführungsbeispiel der Werkzeugantrieb 4 als Exzenterantrieb gestaltet ist und auf das Werkzeugunterteil 3 wirkt, während das Werkzeugoberteil 2 in einer oberen Traverse 5 stationär angeordnet ist. Zwischen dem Werkzeugantrieb 4 und dem Werkzeugunterteil 3 ist eine Zwischenplatte 6 angeordnet ebenso wie zwischen der oberen Traverse 5 und dem Werkzeugoberteil 2. In jeder Zwischenplatte 6 ist eine Mehrzahl von Druckkammern 7, 9, 10, 11, 15 ausgebildet, die über Druckmittelleitungen 8 mit einer Druckquelle verbunden sind. Wie insbesondere aus Fig. 3 ersichtlich ist, ist die erste Druckkammer (9) im Zentrum der Zwischenplatte 6 angeordnet und weist eine der minimalen Siegelfläche entsprechende Ausdehnung auf, während die zweite Druckkammer 10 in Föderrichtung der Deckfolie und der Trägerfolie benachbart zur ersten Druckkammer 9 angeordnet ist. In dem in der Zeichnung dargestellten Ausführungsbeispiel ist eine dritte Druckkammer 11 vorhanden, die benachbart zur vorhergehende Druckkammer 7, also der zweiten Druckkammer 10, angeordnet ist, wobei prinzipiell die Möglichkeit besteht, zur Vergößerung der von der Zwischenplatte 6 beaufschlagten Fläche weitere Druckkammern 7, 9, 10, 11, 15 in der Zwischenplatte 6 auszubilden. Um in möglichst weiten Grenzen die Druckverhältnisse in den Druckkammern 7, 9, 10, 11, 15 variieren zu können, sind den Druckmittelleitungen 8 Absperrventile bzw. Druckminderer zugeordnet. Zu beachten ist weiterhin, dass die korrespondierenden Druckkammern 7, 9, 10, 11, 15 in der oberen Zwischenplatte 6 und der unteren Zwischenplatte 6 die gleiche Größe aufweisen und durch Verbindungsleitungen 12 verbunden sind, so dass auf einfache Weise gewährleistet werden kann, dass in den korrespondierenden Druckkammern 7, 9, 10, 11, 15 gleiche Druckverhältnisse herschen.

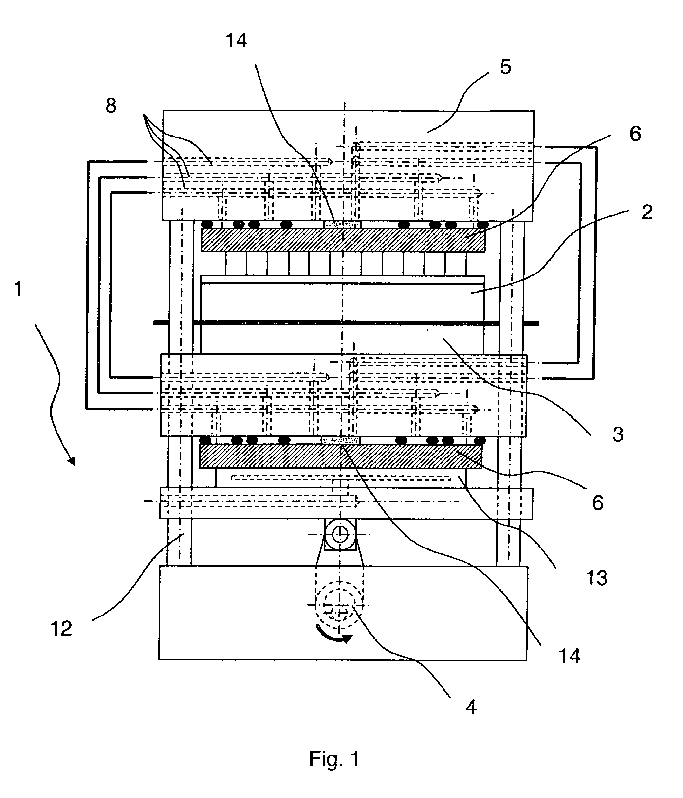

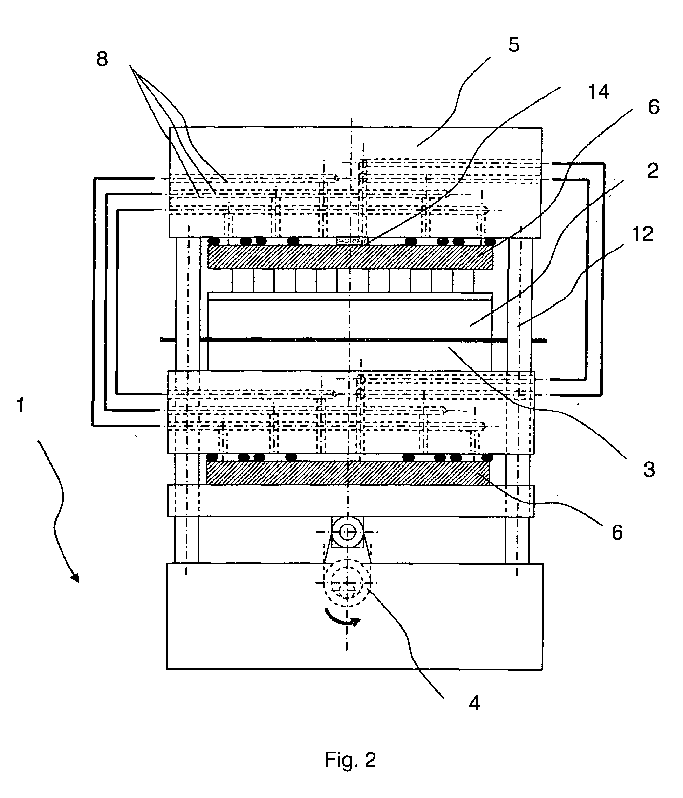

Die Fig. 1 zeigt ein Ausführungsbeispiel, das sich besonders eignet, wenn man den Druck in den Druckkammern 7, 9, 10, 11, 15 immer anstehen lassen möchte, während die Fig. 2 eine Ausführungsform zeigt, bei der die Druckkammern 7, 9, 10, 11, 15 erst bei geschlossenen Siegelwerkzeugen, also wenn das Werkzeugoberteil 2 und das Werkzeugunterteil 3 der Deckfolie und der Trägerfolie bereits anliegen, mit Druckluft beaufschlagt werden. Dabei bleibt der wechselnde Exzenterantrieb in der oberen Totpunktstellung stehen, während bei der Ausführungsform gemäß Fig. 1 der Exznterantrieb durchlaufen kann, da dies dort realisierte Luftkissen 13 die Funktion einer Druckdose übernimmt, um den Überhub auszugleichen.

## Patentansprüche

1. Siegelstation zum Siegeln einer Deckfolie auf eine Trägerfolie, insbesondere in einer Thermoformmaschine, mit einem Werkzeugoberteil (2) und einem Werkzeugunterteil (3), die zum Ausführen des Siegelvorganges mittels eines Werkzeugantriebes (4) relativ zueinander bewegbar sind und zwischen denen die Deckfolie und die Trägerfolie geführt sind, **dadurch gekennzeichnet, daß** zwischen dem Werkzeugantrieb (4) und dem zugeordneten Werkzeugoberteil (2) oder Werkzeugunterteil (3) eine Zwischenplatte (6) angeordnet ist, in der eine Mehrzahl über Druckmittelleitungen (8) mit einer Druckquelle verbundene Druckkammern (7) ausgebildet ist.

2. Siegelstation nach Anspruch 1, **dadurch gekennzeichnet, daß** die Zwischenplatte (6) zweifach vorgesehen ist und sowohl das obere Werkzeugteil (2) als auch das untere Werkzeugteil (3) an einer der Zwischenplatten (6) abgestützt ist.

3. Siegelstation nach Anspruch 1 oder 2, **dadurch gekennzeichnet, daß** die erste Druckkammer (9) im Zentrum der Zwischenplatte (7) angeordnet ist mit einer der minimalen Siegelfläche entsprechenden Ausdehnung.

4. Siegelstation nach Anspruch 3, **dadurch gekennzeichnet, daß** die zweite Druckkammer (10) in Förderrichtung der Deckfolie und der Trägerfolie und/oder quer zur Förderrichtung benachbart zur ersten Druckkammer (9) angeordnet ist.

5. Siegelstation nach Anspruch 4, **dadurch gekennzeichnet, daß** die der zweiten Druckkammer (10) nachfolgenden Druckkammern (11) in Förderrichtung und/oder quer zur Förderrichtung benachbart zur vorhergehenden Druckkammer (10) angeordnet sind.

6. Siegelstation nach einem der Ansprüche 1 bis 5, **dadurch gekennzeichnet, daß** den Druckmittelleitungen (8) Absperrventile zugeordnet sind.

7. Siegelstation nach einem der Ansprüche 1 bis 6, **dadurch gekennzeichnet, daß** den Druckmittelleitungen (8) Druckminderer zugeordnet sind.

8. Siegelstation nach einem der Ansprüche 2 bis 7, **dadurch gekennzeichnet, daß** die korrespondierenden Druckkammern (7) in der oberen Zwischenplatte (6) und der unteren Zwischenplatte (6) die gleiche Größe aufweisen.

9. Siegelstation nach einem der Ansprüche 2 bis 8, **dadurch gekennzeichnet, daß** die korrespondierenden Druckkammern (7) in der oberen Zwischenplatte (6) und der unteren Zwischenplatte (6) durch Verbindungsleitungen (12) verbunden sind.

10. Siegelstation nach einem der Ansprüche 1 bis 9, **dadurch gekennzeichnet, daß** der Werkzeugantrieb (4) als Exzenterantrieb gestaltet ist und auf die untere Zwischenplatte (6) wirkt.

11. Siegelstation nach Anspruch 10, **dadurch gekennzeichnet, daß** die obere Zwischenplatte (6) mit dem Werkzeugoberteil (2) an einer oberen Traverse (5) angeordnet ist.

12. Siegelstation nach einem der Ansprüche 1 bis 11, **dadurch gekennzeichnet, daß** in der Zwischenplatte (6) ein starrer Stempel (14) zur unmittelbaren Kraftübertragung von dem Werkzeugantrieb (4) angeordnet ist.

13. Siegelstation nach einem der Ansprüche 1 bis 12, **dadurch gekennzeichnet, dass** durch die Druckquelle ölfreie Druckluft bereit gestellt ist.
